# FASCICULE DE BREVET EUROPEEN

(11) **EP 1 869 385 B1**
(45) Date de publication et mention de la délivrance du brevet: **02.09.2009**
(21) Numéro de dépôt: 06726290.7
(22) Date de dépôt: 30.03.2006
(51) Int. Cl.: F25J 3/02, F25J 3/08

(54) **PROCEDE ET INSTALLATION INTEGRES D'ADSORPTION ET DE SEPARATION CRYOGENIQUE POUR LA PRODUCTION DE CO2**
INTEGRIERTES VERFAHREN UND INTEGRIERTE ANLAGE FÜR DIE KRYOGENE ADSORPTION UND TRENNUNG ZUR HERSTELLUNG VON CO2
INTEGRATED METHOD AND INSTALLATION FOR CRYOGENIC ADSORPTION AND SEPARATION FOR PRODUCING CO2

(30) Priorité: 08.04.2005 FR 0550906; 08.08.2005 FR 0552459; 24.10.2005 FR 0553219
(43) Date de publication de la demande: 26.12.2007
(60) Demande divisionnaire: 09100096.8
(73) Titulaire: L'AIR LIQUIDE, Société Anonyme pour l'Etude et l'Exploitation des Procédés Georges Claude, 75007 Paris (FR)
(72) Inventeur: DUBETTIER-GRENIER, Richard, F-94210 La Varenne Saint Hilaire (FR); LOCKWOOD, Frederick, F-75010 Paris (FR); GUERET, Vincent, F-75014 Paris (FR)
(74) Mandataire: Mercey, Fiona Susan
(86) Numéro de dépôt international: PCT/FR2006/050276
(87) Numéro de publication internationale: WO 2006/106253

(56) Documents cités:
- EP-A- 0 341 879
- EP-A- 0 417 922
- EP-A- 0 945 163
- EP-A- 1 319 911

## Description

La présente invention est relative à un procédé intégré d'adsorption et de séparation cryogénique pour la séparation du CO₂ contenu dans un gaz et à une installation pour la mise en oeuvre d'un tel procédé.

La récupération de CO₂ des gaz ou des fumées va se développer de plus en plus du fait des dispositifs mis en place pour limiter l'émission de gaz à effet de serre.

La technologie largement dominante pour éliminer et/ou récupérer le CO₂ contenu dans des effluents industriels est l'absorption chimique et plus particulièrement les lavages aux amines (MDEA, MEA...) qui permettent de produire du CO₂ pur basse pression, typiquement ayant une pureté en CO₂ supérieure à 99 %.

Cependant, les procédés de lavage chimiques présentent plusieurs limitations ou inconvénients, à savoir : importante quantité de vapeur requise, sensibilité à l'oxygène, corrosion, coût opératoire élevé, entraînement du solvant et, d'une manière générale, rejets de produits chimiques en quantités non-négligeables, tel qu'amines, ammoniac, sels issus du régénérateur d'amines, produits de dégradation des amines...

Une autre technologie utilisable pour récupérer le CO₂, ne présentant pas ces inconvénients, et en particulier ne demandant pas d'importantes quantités de vapeur, est celle de l'adsorption modulée en pression, comme les procédés VPSA (pour Vacuum Pressure Swing Adsorption ou Adsorption avec Variations de Pression et de Vide), les procédés VSA (pour Vacuum Swing Adsorption ou Adsorption avec Variations de Vide) ou les procédés PSA (pour Pressure Swing Adsorption ou Adsorption avec Variations de Pression).

Dans le cadre de l'invention, on entend par :
- Unité VPSA : une unité de séparation ou purification de gaz mettant en oeuvre un procédé d'adsorption cyclique comportant au moins une phase d'adsorption sur un adsorbant à une pression supérieure à 1,5 bar absolu, et une phase de régénération pendant laquelle la pression est inférieure à la pression atmosphérique.
- Unité VSA : une unité de séparation ou purification de gaz mettant en oeuvre un procédé cyclique comportant au moins une phase d'adsorption sur un solide adsorbant à une pression inférieure à 1,5 bar absolu, et une phase de régénération pendant laquelle la pression est inférieure à la pression atmosphérique.
- Unité PSA : une unité de séparation ou purification de gaz mettant en oeuvre un procédé cyclique comportant au moins une phase d'adsorption sur un solide adsorbant à une pression supérieure à 1,5 bar absolu, et une phase de régénération pendant laquelle la pression est supérieure ou égale à la pression atmosphérique.

Les unités VPSA, VSA et PSA seront désignées ci-après par le terme générique « unités d'adsorption ».

D'autre part, dans le cadre de l'invention :
- Toutes les compositions des gaz sont exprimées en base sèche. La composition en base sèche d'un composant est le rapport, massique ou volumique, de la quantité de matière de ce composant sur la quantité totale de matière présente, hors molécules d'eau. Ainsi, si un flux contenant par exemple 70% de CO₂ contient également 10% d'eau, la teneur en base sèche de CO₂ de ce flux est de 78% environ (70%/90%) ;
- Toutes les compositions de gaz sont indiquées en pourcentages volumiques ;
- L'humidité relative d'un gaz est le rapport, en pourcentage, de la pression partielle de la vapeur d'eau effectivement contenue dans le gaz sur la pression de saturation de la vapeur d'eau aux mêmes conditions de pression et température, selon la définition usuelle ;
- Les compositions de gaz issus des procédés d'adsorption données dans ce document sont des compositions moyennes, moyennées sur un nombre entier de cycle du procédé, les procédés d'adsorption étant des procédés cycliques ;
- Le rendement de récupération d'un composé d'une unité de séparation est le rapport entre la quantité de ce composé entrant dans l'unité et la quantité de ce composé sortant de l'unité sous la forme produite recherchée.

Actuellement, le procédé par adsorption est utilisé dans l'industrie sidérurgique pour le déballastage de gaz issus de procédés de type DRI (pour *Direct Reduced Iron*) ou COREX. Dans ce cas, le gaz de purge du procédé d'adsorption, riche en CO₂, c'est-à-dire contenant typiquement entre 60 et 80% de CO₂, 25% de CO et 5% de N₂, quittant cette unité, est utilisé comme gaz combustible car il contient encore une quantité significative de CO. Les fumées issues de la combustion de ce gaz sont rejetées à l'atmosphère. La décarbonatation des flux d'une unité DRI se fait préférentiellement par une unité VPSA, comme décrit dans le document US-A-5858057 et US-A-5676732. Cependant, l'inconvénient des schémas décrits dans ces documents est que le CO₂ obtenu n'est pas valorisé ou stocké mais est simplement rejeté à l'atmosphère.

Par ailleurs, afin d'améliorer le fonctionnement d'un procédé VPSA CO₂, les documents US-A-5582029 et US-A-6562103 enseignent l'utilisation d'un gaz de purge externe, pauvre en CO₂, pour éluer le lit d'adsorbant, par exemple de l'azote produit par une unité de séparation d'air, ou un flux de gaz naturel. Toutefois, l'inconvénient ici est que le CO₂ en sortie de purge est dilué dans ces gaz de purge et ne peut donc pas être valorisé ou stocké.

Une unité d'adsorption ne permet pas de produire, de manière économiquement acceptable au plan industriel, du CO₂ à une pureté supérieure à 90%, en particulier une pureté entre 90 et 96%, et donc a *fortiori* encore moins à une pureté supérieure à 96%, à partir d'un gaz d'alimentation pauvre en CO₂, c'est-à-dire contenant souvent moins de 45% de CO₂.

De là, ces procédés, utilisés seuls, ne sont pas adaptés à la concentration du CO₂ en vue de sa valorisation industrielle, de sa ré-injection et de son stockage dans des formations géologiques (EOR, ECBM, etc...) ou de toute autre utilisation du CO₂ où des puretés en CO₂ supérieures à 90% sont requises.

De leur côté, les unités cryogéniques de séparation de CO₂, y compris les liquéfacteurs, ne sont utilisées que pour traiter des gaz dont la concentration est supérieure à 50%, préférablement supérieure à 70% et généralement supérieure à 90%, car le rendement de récupération du CO₂ de ces unités s'effondre quand la part de gaz autre que le CO₂ augmente, du fait des caractéristiques physiques des mélanges CO₂ avec de l'azote, du monoxyde de carbone, de l'hydrogène, de l'oxygène, du méthane..., et du point triple du CO₂ qui empêche de descendre à des températures inférieures à -50°C.

Dans le cadre de l'invention, on entend par «unité cryogénique» une unité industrielle de refroidissement de fluide, par exemple du CO₂, dans laquelle au moins un fluide du procédé est refroidi à une température inférieure ou égale à 0°C et subit au moins une étape de condensation partielle. Cette unité peut produire par exemple du CO₂ sous forme gazeuse, liquide ou supercritique. Une unité produisant un liquide comme produit est désignée liquéfacteur.

La récupération du CO₂ du gaz résiduaire d'un PSA H₂ par une unité cryogénique est décrit dans US-A-2002/0073845 et WO-A- 9935455. Le gaz résiduaire du PSA H₂ contient typiquement environ 50% de CO₂. Ces brevets décrivent un procédé cryogénique original permettant de récupérer le CO₂ de ce résiduaire mais ne décrivent pas l'intégration optimisée du PSA H₂ et de l'unité cryogénique, et en particulier n'expliquent pas comment est mise en oeuvre l'interface entre le PSA, qui est un procédé discontinu et cyclique, et l'unité cryogénique, qui est un procédé continu. De plus, la teneur en CO₂ en entrée de l'unité cryogénique est implosée par les performances de production d'hydrogène du PSA, mais il n'y a pas d'intégration entre les deux unités et de fonctionnement optimal combiné. Par exemple, aucune recycle entre les deux unités n'est envisagée.

Le document EP-A-341879 décrit également un procédé de coproduction de CO₂ et de H₂, dans lequel un syngas issu d'un SMR suivi d'un réacteur Shift est envoyé vers un PSA H₂ dont le gaz résiduaire, qui contient environ 50% de CO₂, est envoyé vers un PSA CO₂. Ce PSACO₂ produit un deuxième gaz enrichi en CO₂ contenant au moins 98% de CO₂, lequel est envoyé vers un appareil de séparation cryogénique qui produit un liquide contenant au moins 99,9% de CO₂. Dans ce brevet, le PSACO₂ produit un CO₂ à une pureté poussée (>98%), ce qui aboutit à un procédé global de récupération du CO₂ sous-optimisé. De plus, bien que l'interface entre le PSAH₂ et le PSACO₂ soit décrite, l'interface entre le PSA CO₂ et le liquéfacteur n'est pas abordée, alors que c'est un point posant des problèmes importants entre un procédé cyclique et un procédé continu.

Le couplage d'un PSA et d'une unité de liquéfaction est également décrit dans Takamura et al., The Canadian Journal of Chemical Engineering, 79 (5), 812 - 816: Application of high pressure swing adsorption process for improvement of CO2 recovery system from flue gas; 2001. Un séparateur ultra froid est placé sur le gaz résiduaire d'un PSA traitant les effluents d'une chaudière. Les composés incondensables du liquéfacteur sont introduits dans un PSA « haute pression » et la purge de ce PSA est réintroduite à l'alimentation du liquéfacteur pour en améliorer le rendement. Toutefois, il n'y est pas fait mention de la manière de coupler le PSA cyclique avec le liquéfacteur continu.

Le document EP-B-0417922 décrit un procédé pour produire du CO₂ à partir d'un gaz relativement pauvre en CO₂ qui est d'abord envoyé dans des lits de séchage par adsorption puis vers une colonne de distillation. Les composés incondensables de la colonne sont ensuite envoyés dans une unité PSA et le gaz riche en CO₂ issu de ce PSA est recyclé en entrée du liquéfacteur. Dans le même ordre d'idées, le document GB-A-2174379 décrit l'emploi d'une membrane en lieu et place du PSA pour séparer le CO₂ du flux des incondensables issus de la colonne. Ces schémas, dans lesquels la première séparation de CO₂ s'effectue par distillation cryogénique, ne peuvent être intéressants économiquement que si la teneur en CO₂ du gaz d'alimentation n'est pas trop basse, typiquement si elle est supérieure à environ 50%.

Le document EP-A-1319911 décrit une méthode de liquéfaction de CO₂ où un séchage par adsorption précède la séparation cryogénique du CO₂. Ce document ne traite pas d'une pré-séparation du CO₂ par unité d'adsorption.

Le document EP-A-0945163 décrit l'utilisation combinée de modules de membranes et d'un PSA pour séparer et purifier l'hydrogène. Ce système n'est pas optimisé pour la récupération du CO₂ et plus précisément ne comporte pas de partie cryogénique qui permettrait d'atteindre des spécifications plus exigeantes sur le CO₂ produit.

En outre, les documents US-A-4639257 et US-A-4602477 enseignent des procédés utilisant en combinaison une membrane et une unité de distillation cryogénique pour séparer le CO₂. Les unités d'adsorption mises en oeuvre ne servent qu'à éliminer l'eau du flux gazeux et non à séparer le CO₂ de manière significative.

La présente invention a notamment pour objet de pallier aux inconvénients de l'art antérieur et de proposer des solutions de mise en oeuvre et d'optimisation d'un procédé intégrant une unité d'adsorption et une unité cryogénique pour la séparation efficace du CO₂ d'un flux contenant moins de 60% de CO₂, les autres constituants étant des constituants plus volatils, par exemple CO, N₂, H₂, CH₄...

Plus précisément, un but du procédé selon l'invention est d'assurer, à moindre coût, un rendement de récupération du CO₂ d'environ 90% et/ou une pureté de CO₂ produit adaptée aux spécifications de stockage géologique (aquifères, veines de charbons...) et/ou de récupération assistée de combustibles fossiles (EOR, ECBM, etc). Par exemple, les puretés de CO₂ souhaitées pour ces applications sont généralement supérieure à environ 89%, typiquement supérieure à 94%, et inférieures à 99% environ.

Un des objets de l'invention est alors un procédé intégré mettant en oeuvre une unité d'adsorption couplée à une unité cryogénique, dans lequel un gaz d'alimentation contenant du CO₂ est envoyé à l'unité d'adsorption où il se sépare en un premier débit enrichi en CO₂ et un premier débit appauvri en CO₂, le premier débit enrichi en CO₂ étant envoyé à l'unité cryogénique où il est séparé en un second débit riche en CO₂ et un second débit pauvre en CO₂, caractérisé en ce que ledit gaz d'alimentation est un gaz de haut-fourneau et le premier débit enrichi en CO₂ issu de l'unité d'adsorption est d'abord envoyé vers des moyens d'homogénéisation de gaz aptes à atténuer les variations cycliques de débits, de pression et/ou de composition de ce premier débit, inhérentes au caractère cyclique de l'unité d'adsorption, puis soumis à au moins une étape de compression intermédiaire avant son entrée dans l'unité cryogénique, c'est à dire en amont et/ou préalablement à son entrée dans l'unité cryogénique.

Les moyens d'homogénéisation de gaz permettant d'atténuer les variations cycliques du flux issu de l'unité d'adsorption peut être, par exemple, un stockage intermédiaire, telle une capacité ou un réservoir, éventuellement maintenu à une pression sensiblement constante. Plus précisément, ce stockage de gaz intermédiaire peut être par exemple un gazomètre à volume variable et à pression sensiblement constante, ou une capacité à volume fixe équipée d'un système de contrôle de la pression permettant de maintenir une pression sensiblement constante.

Autrement dit, un des aspects de la présente invention est le couplage d'une unité d'adsorption et d'une unité cryogénique mettant en oeuvre une première étape d'homogénéisation de gaz permettant d'atténuer les variations cycliques de débits, de compositions et/ou de pressions du premier flux enrichi en CO₂ issu de l'unité d'adsorption et une seconde étape de compression intermédiaire, ces deux étapes étant réalisées entre l'étape de séparation par adsorption et celle de séparation cryogénique, c'est-à-dire entre l'unité d'adsorption et l'unité cryogénique.

L'étape d'homogénéisation permet d'atténuer les variations cycliques du flux issus de l'unité d'adsorption et peut être réalisée par la mise en oeuvre d'un stockage de gaz intermédiaire ou de tout autre dispositif apte à remplir cette fonction d'atténuation/d'homogénéisation, et permettant de recueillir tout ou partie du flux enrichi en CO₂ sortant de l'unité d'adsorption.

L'unité d'adsorption réalise donc d'abord une «pré-séparation» du CO₂ et l'unité cryogénique réalise ensuite la séparation finale du CO₂ grâce à divers dispositifs d'intégration installés entre l'unité adsorption et l'unité cryogénique.

La mise en oeuvre de moyens d'homogénéisation de gaz ou d'un dispositif permettant d'atténuer les variations cycliques du flux enrichi en CO₂ issu de l'unité d'adsorption (débit, composition, pression, etc...), inhérentes au fonctionnement cyclique de l'unité d'adsorption, permet d'assurer un fonctionnement continu du compresseur et de l'unité cryogénique situés en aval.

On obtient alors un système couplant un procédé discontinu cyclique mis en oeuvre par l'unité d'adsorption, et un système continu mis en oeuvre par l'unité cryogénique, avec des moyens de contrôle de procédés réduits à l'interface.

De plus, en cas d'arrêt de l'une de ces deux unités, pour maintenance par exemple, les deux unités peuvent être aisément découplées.

Par ailleurs, le fait de réaliser une compression jusqu'à au moins 15 bar en amont de l'unité cryogénique permet d'assurer les rendements voulus dans l'unité cryogénique sur des gaz d'entrée contenant entre 40% et 95% de CO₂, ce qui relâche les contraintes sur les performances de séparation de l'unité d'adsorption.

De manière symétrique, une partie des gaz incondensables issus de l'unité cryogénique est éventuellement recyclé vers l'unité d'adsorption et permet donc de relâcher les contraintes sur les performances de séparation de l'unité cryogénique.

On obtient ainsi un système intégré et combiné entre l'unité d'adsorption et l'unité cryogénique qui permet d'optimiser les coûts de séparation de l'ensemble du système.

Selon le cas, le procédé de l'invention peut comprendre, en outre, l'une ou plusieurs des caractéristiques suivantes :
- le premier débit enrichi en CO₂ issu de l'unité d'adsorption a une pression de moins de 4 bar, de préférence de moins de 2 bar, et une teneur en CO₂ comprise entre 40% et 95%, de préférence entre 60% et 85% et/ou une humidité relative supérieure à 5%.
- le second débit riche en CO₂ issu de l'unité de séparation cryogénique a une teneur en CO₂ supérieure à 80%, de préférence supérieure à 90%, et encore plus préférablement supérieure à 95%.
- le premier gaz enrichi en CO₂ sortant de l'unité d'adsorption est envoyé vers les moyens d'homogénéisation de gaz permettant d'atténuer les variations cycliques de débit, de compositions et/ou de pressions de ce gaz, puis est soumis à la compression intermédiaire.
- les moyens d'homogénéisation de gaz est une capacité ou un réservoir de mélange, par exemple une capacité à volume constant avec contrôle de la pression ou un gazomètre à volume variable et à pression sensiblement constante.
- le premier débit appauvri en CO₂ produit par l'unité d'adsorption est détendu dans une turbine qui peut amener de la puissance frigorifique à l'unité cryogénique.
- le premier gaz pauvre en CO₂ produit par l'unité d'adsorption est d'abord refroidi avant d'être détendu dans la turbine.
- au moins une partie du second gaz pauvre en CO₂ quittant l'unité cryogénique est renvoyé vers l'unité d'adsorption, particulièrement soit à l'aspiration du compresseur d'alimentation de l'unité d'adsorption, soit en amont du ou des adsorbeurs de l'unité d'adsorption, soit dans les adsorbeurs pendant une étape de repressurisation, à co-courant ou à contre-courant, soit dans le ou les adsorbeurs pendant une étape d'adsorption.
- au moins une partie du second gaz pauvre en CO₂ quittant l'unité cryogénique est détendue dans une turbine puis recyclée vers l'unité d'adsorption, soit à l'aspiration du compresseur d'alimentation, soit en amont du ou des adsorbeurs, soit dans le ou les adsorbeurs pendant une étape de repressurisation, à co-courant ou à contre-courant, soit dans le ou les adsorbeurs pendant une étape d'adsorption.
- avant d'entrer dans la turbine, le gaz recyclé est d'abord réchauffé par combustion directe de ce gaz (injection d'air ou d'air enrichi) et/ou par chauffage dans une chaudière brûlant de préférence du gaz de haut fourneau et/ou par échange avec un fluide du site sidérurgique dont la température est supérieure à 150°C et/ou par échange de chaleur avec le premier gaz enrichi en CO₂ produit par l'unité d'adsorption en amont de l'unité cryogénique.
- au moins une partie du second gaz pauvre en CO₂ quittant l'unité cryogénique est utilisée comme combustible pour chauffer le gaz de l'unité cryogénique, chauffer le réchauffeur de régénération de l'unité cryogénique, par exemple un séchage par adsorption, et/ou chauffer le premier gaz pauvre en CO₂ de l'unité d'adsorption, avant ou après détente dans une éventuelle turbine, et/ou chauffer un réchauffeur de régénération d'une unité de séparation d'air et/ou produire de la vapeur pouvant être utilisée dans l'installation par le réchauffeur de régénération de l'unité cryogénique et/ou, une ou des turbine(s) d'entraînement des machines et/ou un groupe frigorifique par absorption servant par exemple à refroidir le gaz avant les purificateurs de l'unité cryogénique et/ou un échangeur thermique chauffant le premier gaz pauvre en CO₂ quittant l'unité d'adsorption.
- au moins une partie du premier gaz pauvre en CO₂ quittant l'unité d'adsorption est utilisée comme combustible pour chauffer le réchauffeur de régénération, par exemple pour des lits de séchage, de l'unité cryogénique et/ou produire de la vapeur pouvant être utilisée dans l'installation par le réchauffeur de régénération et/ou une ou des turbine d'entraînement des machines et/ou un groupe frigorifique par absorption servant par exemple à refroidir le gaz avant les purificateurs de l'unité cryogénique et/ou un échangeur thermique chauffant le premier gaz pauvre en CO₂ quittant l'unité d'adsorption.
- le groupe frigorifique de l'unité cryogénique sert également à refroidir le gaz en entrée de l'unité d'adsorption.
- le premier gaz enrichi en CO₂ sortant de l'unité d'adsorption est envoyé dans une capacité ou réservoir de mélange avant d'être introduit dans l'unité cryogénique.
- les composés non-condensables quittant l'unité cryogénique (9) sont refroidis suffisamment pour faire givrer du CO₂ sous forme de neige carbonique et pour séparer le CO₂ ainsi givré du flux contenant les composés non-condensables.
- au moins une partie du débit enrichi en CO₂ comprimé à l'étape de compression intermédiaire est refroidi à une température supérieure à 0°C, de préférence la partie liquide qui se condense est éliminée, par exemple dans un dispositif de séparation de phases.

Selon un autre aspect, l'invention porte aussi sur une installation Intégrée de production de CO₂ à partir d'un gaz d'alimentation contenant du CO₂ **et** provenant d'un haut-fourneau comprenant une unité d'adsorption pour séparer le gaz contenant du CO₂ et provenant d'un haut-fourneau en un premier débit enrichi en CO₂ et un premier débit appauvri en CO₂, l'unité d'adsorption alimentant une unité cryogénique en ledit premier débit enrichi en CO₂, et une unité cryogénique pour séparer le premier débit riche en CO₂ issu de l'unité d'adsorption en un second débit riche en CO₂ et un second débit pauvre en CO₂, dans laquelle le débit enrichi en CO₂ issu de l'unité d'adsorption a une teneur en CO₂ comprise entre 40 et 95% et en ce qu'elle comporte, en outre, un dispositif ou des moyens d'homogénéisation de gaz aptes à atténuer les variations cycliques (débit, composition, pression, etc...) du débit enrichi en CO₂ issu de l'unité d'adsorption et des moyens de compression intermédiaires agencés sur le trajet du premier débit enrichi en CO₂, entre l'unité d'adsorption et l'unité cryogénique. Avantageusement, le débit enrichi en CO₂ issu de l'unité d'adsorption a une teneur en CO₂ comprise entre 60 et 85%.

Les moyens d'homogénéisation de gaz sont agencés en amont des moyens de compression, c'est à dire entre l'unité d'adsorption et les moyens de compression.
L'installation de l'invention comporte éventuellement aussi des moyens permettant d'opérer des recyclages de gaz entre l'unité d'adsorption et l'unité cryogénique, par exemple des moyens permettant de recycler au moins une partie des gaz incondensables issus de l'unité cryogénique vers l'unité d'adsorption, particulièrement soit à l'aspiration du compresseur d'alimentation de l'unité d'adsorption, soit en amont du ou des adsorbeurs de l'unité d'adsorption, soit dans les adsorbeurs pendant une étape de repressurisation, à co-courant ou à contre-courant, soit dans le ou les adsorbeurs pendant une étape d'adsorption, les recycles pouvant éventuellement passer par des moyens de réchauffage, de combustion et de détente.

L'invention sera décrite en plus de détail en se référant aux Figures 1 à 5 qui sont des schémas illustratifs de modes de réalisation de l'invention et aux Figures 6 et 7 qui sont des schémas d'unités cryogéniques 9 aptes à être utilisées dans un procédé selon l'invention.

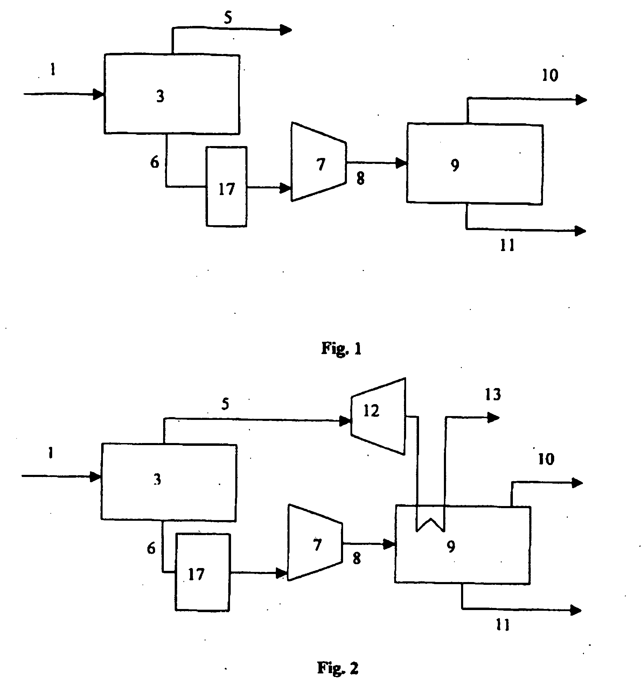

La Figure 1 montre une unité d'adsorption 3 de type VPSA, VSA ou PSA alimentée par un gaz 1 d'alimentation, encore appelé gaz à traiter, qui contient par exemple entre 10 et 60 % de CO₂, mélangé avec au moins un autre gaz pouvant être N₂, CO, H₂, O₂, CH₄, Ar, H₂O ... Ce gaz est un gaz de haut-fourneau contenant en moyenne par exemple 23% de CO₂, 23% de CO, 50% de N₂ et 4% de H₂, disponible à environ 50°C et 2 bar abs., à un débit compris par exemple entre 50 000 Nm³/h et 800 000 Nm³/h.

Le gaz à traiter 1 par l'unité d'adsorption 3 est typiquement à une pression entre 1 et 10 bar absolus. Cette pression est atteinte en rajoutant éventuellement un compresseur en amont du ou des adsorbeurs de l'unité d'adsorption 3.

Le procédé de la présente invention est un procédé intégré utilisant, en série, une unité d'adsorption 3 couplée à une unité cryogénique 9, dont l'ensemble est optimisé pour la production de CO₂ à moindre coût, avec un rendement de récupération du CO₂ d'environ 90% et/ou une pureté typique de CO₂ produit d'environ 90 à 99%, notamment grâce au passage du gaz enrichi en CO₂ issu de l'unité d'adsorption dans une capacité ou réservoir tampon 17 constituant tout ou partie des moyens d'homogénéisation de gaz, et/ou une compression intermédiaire, comme détaillé ci-après.

Selon ce procédé schématisé sur la Figure 1 ci-annexée, le gaz 1 à traiter est d'abord envoyé à l'unité d'adsorption 3 ou aux unités d'adsorption, dans le cas où on met en oeuvre plusieurs unités d'adsorption fonctionnant en parallèle, où il se sépare en un premier débit enrichi 6 en CO₂ et un premier débit appauvri 5 en CO₂.

Le premier débit enrichi 6 en CO₂ est produit à moins de 4 bar, typiquement à moins de 2 bar, par exemple entre 1 et 2 bar, et est ensuite envoyé à l'unité cryogénique 9, sans subir d'autres étapes de séparation, mis à part éventuellement une récupération d'une partie de l'eau qu'il contient.

Le premier débit enrichi 6 en CO₂ quittant l'unité d'adsorption 3 a une teneur en CO₂ comprise entre 40% et 95%, typiquement entre 60% et 85%, une pression de moins de 4 bar, typiquement de l'ordre de 1 à 2 bar, et une humidité relative en général d'au moins 5%.

Selon l'invention, l'étape d'atténuation des variations cycliques de débit, composition, pression, etc... 17 et l'étape de compression intermédiaire 7 sont réalisées sur le premier débit enrichi 6 en CO₂ quittant l'unité d'adsorption 3, en amont de l'unité cryogénique 9, via un ou plusieurs compresseurs ou tout autre dispositif de compression de gaz adapté, placés entre ces deux unités 3, 9.

Les moyens d'homogénéisation de gaz ou dispositif d'atténuation des variations cycliques 17, placé sur le trajet du débit enrichi en CO₂ quittant l'unité d'adsorption 3, avant sa compression 7 intermédiaire, est par exemple une capacité à volume constant avec contrôle de la pression ou un gazomètre à volume variable et à pression sensiblement constante. La pression de cette capacité ou réservoir de mélange est typiquement inférieure à 4 bar abs, préférentiellement inférieure à.2 bar abs. L'étape de compression intermédiaire permet de faire remonter la pression du gaz enrichi en CO₂ issu de l'unité d'adsorption 3 et stocké dans la capacité ou réservoir de mélange 17 d'une pression basse inférieure à 4 bar abs. jusqu'à des niveaux de pression compatibles avec une séparation cryogénique efficace, c'est à dire à une pression de plus de 15 bar, typiquement entre 20 et 80 bar, de manière à améliorer le rendement de récupération de CO₂ dans l'unité cryogénique.

Au sein de l'unité cryogénique 9, le débit gazeux comprimé est séparé en un second débit 11 riche en CO₂ et un second débit 10 pauvre en CO₂. Le second débit 11 riche en CO₂ quittant l'unité cryogénique 9 a une teneur en CO₂ supérieure à 80 %, préférablement d'au moins 90%, encore plus préférablement d'au moins 94%.

Autrement dit, le premier flux 6 enrichi en CO₂ qui sort de l'unité d'adsorption 3 est ensuite envoyé aux moyens d'homogénéisation de gaz, puis à un ou des moyens ou dispositifs de compression 7 intermédiaire(s), tel qu'un ou plusieurs compresseurs ou tout autre dispositif apte à opérer une compresion de gaz, avant d'être acheminé, via la ligne 8, jusqu'à une unité cryogénique 9 où il se condense au moins partiellement et au moins une fois.

Avant d'être partiellement condensé, le premier débit 6 enrichi en CO₂ issu de l'unité d'adsorption est donc comprimé à une pression supérieure à 6 bar abs, de préférence supérieure à 20 bar abs, typiquement entre 20 et 80 bar et préférentiellement entre 30 et 50 bar, pour une teneur moyenne en CO₂ du flux 6 de 40 à 95%, typiquement entre 60 et 85% en sortie de l'unité d'adsorption 3.

L'unité cryogénique 9, qui peut être par exemple un liquéfacteur, produit un second gaz 10 pauvre en CO₂ et un second gaz 11 riche en CO₂ contenant au moins 80% de CO₂ et de préférence de 90 à 99% de CO₂, voire éventuellement plus de 99% de CO₂.

Le CO₂ peut ensuite être épuré pour produire un gaz contenant du CO₂ encore plus pur, par exemple dans une colonne d'épuisement (non montrée) située en aval, avant son envoi vers un site utilisateur ou de stockage.

Par ailleurs, l'unité d'adsorption 3 comprend, en outre, un ou des adsorbeurs fonctionnant en parallèle, un système de vannes ainsi qu'éventuellement une ou des pompes à vide lorsqu'il s'agit d'une unité VPSA ou VSA, un compresseur de gaz à traiter, une capacité ou réservoir de stockage de gaz enrichi en CO₂, et/ou une capacité ou réservoir de stockage de gaz appauvri en CO₂.

En outre, l'unité cryogénique 9 peut comprendre notamment un ou des pré-purifcateurs de gaz, typiquement contenant de l'alumine ou un tamis moléculaire, un charbon activé ou un gel de silice, et leur réchauffeur de régénération, un échangeur froid ainsi qu'éventuellement un ou plusieurs condenseurs/rebouilleurs, pots séparateurs, colonnes à distiller, compresseurs, dispositifs d'élimination catalytique ou non du CO et de l'hydrogène, groupe frigorifique mécanique ou par absorption, et/ou dispositif de pré-refroidissement avant les sécheurs

La Figure 2 diffère de la Figure 1 uniquement en ce que le premier gaz appauvri en CO₂ 5 est détendu dans une turbine 12. L'énergie récupérée sur la turbine 12 peut soit servir à entraîner le compresseur 7, même partiellement avec un moteur auxiliaire, soit être utilisée pour produire de l'électricité. La turbine 12 amène une partie de sa puissance frigorifique à l'unité cryogénique 9, via la ligne 13.

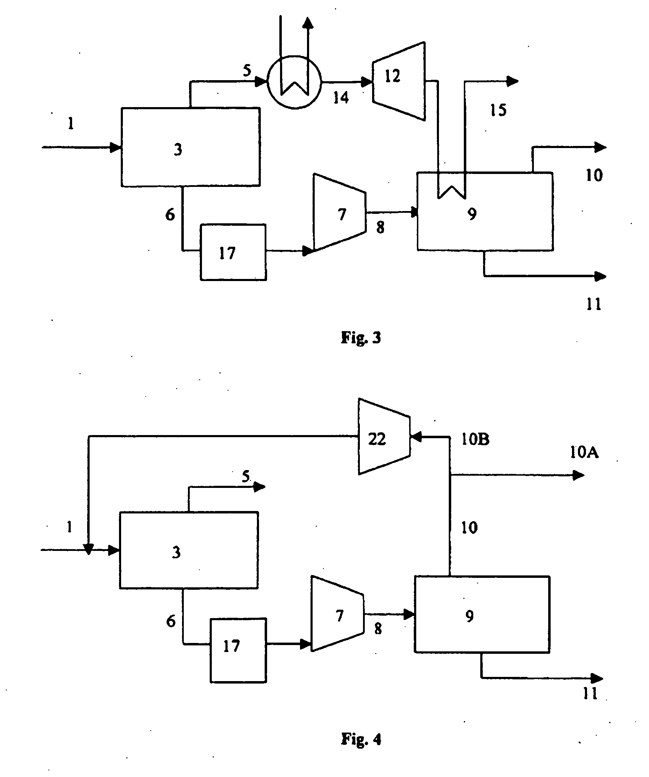

La Figure 3 diffère de la Figure 2 uniquement par l'incorporation d'un refroidisseur 14 en amont de la turbine 12, lequel sert à amener de la puissance frigorifique supplémentaire à l'unité cryogénique 9 en envoyant le gaz détendu dans la turbine 12 vers un échangeur de l'unité cryogénique 9. Dans le cas où le CO₂ liquide se vaporise dans l'unité cryogénique, la plupart ou même la totalité de l'apport de frigories provient de cette chaleur latente. Pourtant, un apport, même faible, pour compenser les pertes thermiques peut être nécessaire ou souhaitable et peut dès lors être fourni par le gaz détendu. Par contre, si le but de la détente est de produire de l'énergie plutôt que de fournir des frigories à l'unité cryogénique, il est alors plus intéressant de chauffer le débit à détendre.

La Figure 4 montre un autre mode de réalisation dans lequel le second débit pauvre en CO₂ 10 est divisé en deux flux 10A et 10B annexes. L'un de ces flux 10A peut servir de purge, alors que l'autre 10B est détendu dans une turbine 22 puis le flux qui en résulte est recyclé en amont de l'unité d'adsorption 3. Il est à noter cependant que, selon une variante de réalisation, la totalité du flux 10 peut être recyclée via la turbine 22, ce qui revient à supprimer la ligne 10A.

Le gaz détendu sortant de la turbine 22 peut éventuellement être envoyé dans les adsorbeurs de l'unité d'adsorption 3 pendant une étape de repressurisation ou pendant une étape d'adsorption. Un procédé de recyclage dans lequel le débit 10 serait recyclé directement vers l'unité adsorption 3, donc sans transiter par une turbine 22, serait également envisageable.

L'énergie récupérée à l'arbre de la turbine 22 peut soit servir à produire de l'électricité, soit entraîner un compresseur.

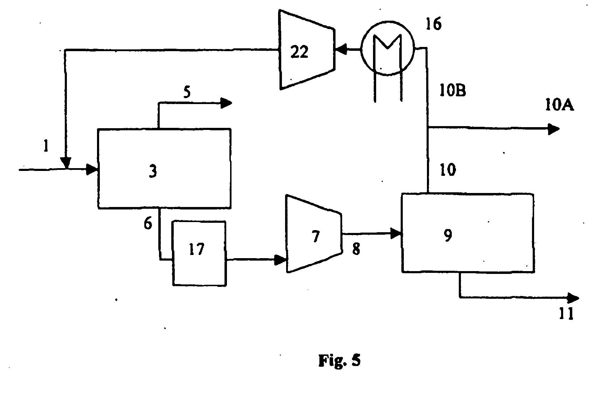

Il peut aussi être avantageux, comme l'on voit sur la Figure 5, de chauffer le flux de gaz 10B en amont de la turbine 22 via des moyens de chauffage 16 adéquats. Le gaz peut ainsi être chauffé par combustion directe, par chauffage dans une chaudière ou par échange de chaleur avec un fluide disponible sur le site, par exemple les fumées issues d'une unité Cowpers.

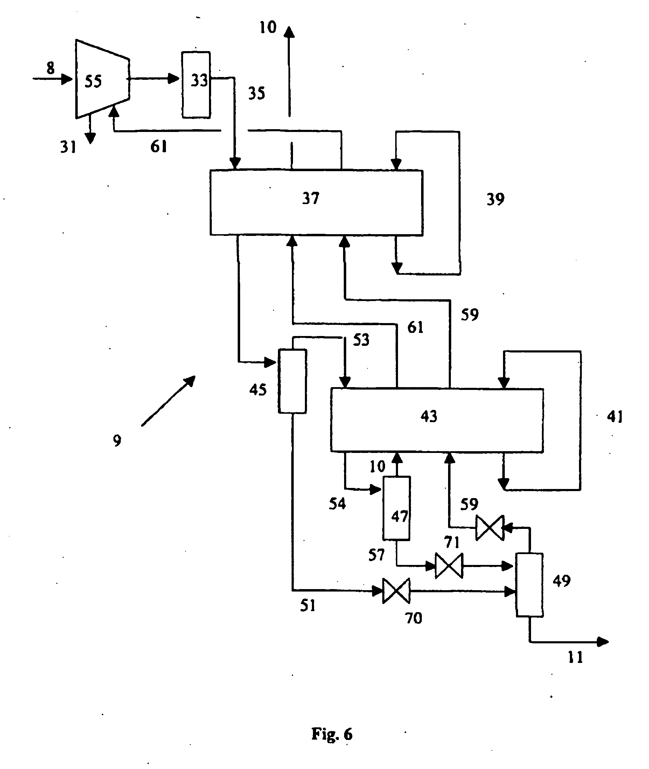

La Figure 6 montre un premier exemple détaillé d'une unité cryogénique 9 selon les Figures 1 à 5 permettant de séparer par condensation partielle un gaz contenant du CO₂.

Le premier débit 6 de gaz riche en CO₂, c'est-à-dire ayant une teneur en CO₂ comprise entre 40% et 95%, typiquement entre 60% et 85%, est amené par la ligne 8 (voir Fig. 1 à 5) jusqu'à l'unité cryogénique 9. Si besoin est, le gaz peut y être comprimé par un compresseur 55 additionnel, notamment si l'on souhaite légèrement monter la pression du gaz comprimé dans l'unité de compression intermédiaire 7. Ensuite, le gaz comprimé est envoyé à un dispositif purificateur 33 de gaz opérant par exemple une élimination des impuretés par adsorption au travers d'un lit radial ou axial afin de pré-purifier (et/ou sécher) le gaz riche en CO₂, avant de le refroidir en dessous de -10°C. Ce dispositif purificateur 33 est périodiquement régénéré par un gaz réchauffé dans un réchauffeur de régénération (non schématisé).

Le gaz purifié récupéré par la ligne 35 se refroidit ensuite dans un échangeur de chaleur 37 où il est partiellement condensé. La phase condensée liquide 51 est séparée de la phase gazeuse 53 dans un séparateur de phases 45.

La partie liquide 51 est envoyée à un stockage 49 après détente dans une vanne 70 de détente, alors que la partie gazeuse 53 est envoyée à un deuxième échangeur de chaleur 43 où elle se condense partiellement.

La phase partiellement condensée 54 est séparée de la phase gazeuse 61 dans un séparateur de phases 47. Le débit liquide 57 soutiré du séparateur de phases 47 est envoyé au réservoir de stockage 49, après détente, là encore, dans une vanne de détente 71.

Le débit gazeux 59 issu du stockage 49 est renvoyé successivement aux échangeurs thermiques 43 et 37 afin de valoriser le froid qu'il contient, avant d'être recyclé vers les moyens de compression 55 additionnels, s'ils sont présents dans l'unité cryogénique 9, ou, en l'absence de ceux-ci, vers une étape intermédiaire du compresseur 7 intermédiaire situé entre les unités d'adsorption 3 et cryogénique 9.

Le débit 10 issu du séparateur des phases 47 est également renvoyé successivement aux échangeurs thermiques 43 et 37 afin de valoriser le froid qu'il contient.

Le produit liquide 11 contenant au moins 90% de CO₂ est soutiré du stockage 49.

Les frigories pour la liquéfaction au sein des échangeurs 37 et 43 sont fournies par deux cycles frigorigènes 39, 41, classiques, qui peuvent éventuellement être couplés.

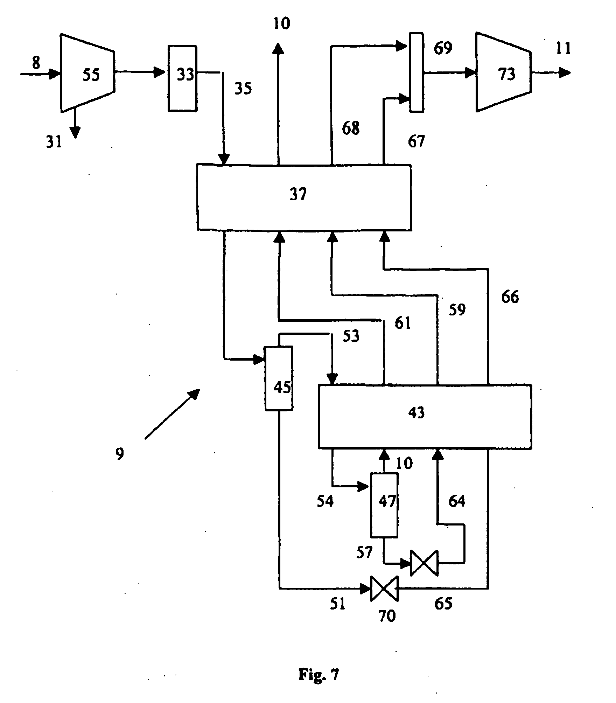

La Figure 7 montre un deuxième exemple d'une unité cryogénique 9 utilisable dans les installations décrites sur les Figures 1 à 5, qui permet de faire une épuration et produire du CO₂ à haute pression, c'est-à-dire jusqu'à environ 60 bar, donc prêt à être convoyé par canalisations de gaz.

Comme précédemment, le débit 8 gazeux ayant une teneur en CO₂ comprise entre 40% et 95%, typiquement entre 60% et 85%, est comprimé (en 55) puis purifié (en 33) et est refroidi dans l'échangeur de chaleur 37 où il est partiellement condensé. Là encore, la phase condensée 51 est séparée de la phase gazeuse 53 dans un séparateur de phases 45.

La partie gazeuse 53 est envoyée à un deuxième échangeur de chaleur 43 où elle se condense partiellement. La phase partiellement condensée 54 est séparée de la phase gazeuse dans un séparateur de phases 47. Le débit liquide 57 soutiré du séparateur de phases 47 est détendu et renvoyé successivement aux échangeurs thermiques 43 et 37 afin de valoriser le froid qu'il contient.

Le débit gazeux issu du séparateur de phases 47 est renvoyé successivement aux échangeurs thermiques 43 et 37 afin de valoriser le froid qu'il contient.

La partie liquide 51 issu du premier séparateur des phases 45 est également détendue et renvoyé successivement aux échangeurs thermiques 43 et 37 afin de valoriser le froid qu'il contient.

Les flux 67 et 68 sont ensuite combinés et comprimées à une pression nécessaire pour transport par canalisations de gaz. Si le flux 69 combiné est diphasique, il est réchauffé pour le rendre totalement gazeux avant de l'envoyer dans le compresseur 73, puis de le convoyer via la ligne 11. Ce flux produit, véhiculé par la ligne 11, est formé de CO₂ ayant une pureté d'au moins 90%, typiquement d'au moins 90 à 96%.

## Revendications

1. Procédé intégré mettant en oeuvre une unité d'adsorption (3) et une unité cryogénique (9), dans lequel un gaz d'alimentation contenant du CO₂ est envoyé à l'unité d'adsorption (3) où il se sépare en un premier débit enrichi en CO₂ (6) et un premier débit appauvri en CO₂ (5), le premier débit enrichi en CO₂ étant envoyé à l'unité cryogénique (9) où il est séparé en un second débit riche en CO₂ (11) et un second débit pauvre en CO₂ (10), **caractérisé en ce que** ledit gaz d'alimentation est un gaz de haut-fourneau et le premier débit enrichi en CO₂ (6) issu de l'unité d'adsorption (3) contient entre 40% et 95% de CO₂, de préférence entre 60% et 85% de CO₂, et est envoyé vers des moyens d'homogénéisation de gaz (17) aptes à atténuer des variations cycliques de pression, de débit et/ou de composition dudit gaz, puis est soumis à au moins une étape de compression intermédiaire (7) avant son entrée dans l'unité cryogénique (9).

2. Procédé selon la revendication 1, **caractérisé en ce que** les moyens d'homogénéisation de gaz (17) comprennent au moins une capacité ou un réservoir de stockage, de préférence la capacité ou le réservoir est maintenu à pression sensiblement constante.

3. Procédé selon la revendication 1 ou 2, **caractérisé en ce que** le premier débit enrichi en CO₂ (6) issu de l'unité d'adsorption (3) a une pression inférieure à 4 bar, de préférence inférieure à 2 bar.

4. Procédé selon l'une des revendications 1 à 3, **caractérisé en ce que** le second débit riche en CO₂ (11) issu de l'unité de séparation cryogénique (9) a une teneur en CO₂ supérieure à 80 %, de préférence supérieure à 90%, et encore plus préférablement supérieure à 95%.

5. Procédé selon l'une des revendications 1 à 4, **caractérisé en ce qu'**au moins une partie du second gaz pauvre en CO₂ (10, 10B) quittant l'unité cryogénique (9) est renvoyée vers l'unité d'adsorption (3).

6. Procédé selon la revendication 5, **caractérisé en ce qu'**au moins une partie du second gaz pauvre en CO₂ (10, 108) quittant l'unité cryogénique (9) est renvoyée soit à l'aspiration d'un compresseur d'alimentation de l'unité d'adsorption (3), soit en amont du ou des adsorbeurs de l'unité d'adsorption (3), soit dans le ou les adsorbeurs de l'unité d'adsorption (3) pendant une étape de repressurisation, à co-courant ou à contre-courant, ou pendant une étape d'adsorption.

7. Procédé selon l'une des revendications 1 à 6, **caractérisé en ce qu'**un groupe frigorifique de l'unité cryogénique (9) sert également à refroidir le gaz d'alimentation (1) en entrée de l'unité d'adsorption (3).

8. Procédé selon l'une des revendications 1 à 7, **caractérisé en ce que** le premier débit appauvri en CO₂ (5) produit par l'unité d'adsorption (3) est détendu dans une turbine (12) de manière à produire de la puissance frigorifique (15) pour l'unité cryogénique (9).

9. Procédé selon l'une des revendications 1 à 8, **caractérisé en ce qu'**au moins une partie (10B) du second gaz pauvre en CO₂ (10) quittant l'unité cryogénique (9) est détendue dans une turbine (22).

10. Procédé selon la revendication 9, **caractérisé en ce qu'**au moins une partie (10B) du second gaz pauvre en CO₂ (10) détendu dans une turbine (22) est recyclée vers l'unité d'adsorption (3).

11. Procédé selon la revendication 10, **caractérisé en ce que** le second gaz pauvre en CO₂ (10) détendu est recyclé soit à l'aspiration d'un compresseur d'alimentation de l'unité d'adsorption (3), soit en amont du ou des adsorbeurs de l'unité d'adsorption (3), soit dans le ou les adsorbeurs pendant une étape de repressurisation, à co-courant ou à contre-courant, ou pendant une étape d'adsorption.

12. Procédé selon l'une des revendications 9 ou 10, **caractérisé en ce qu'**avant d'entrer dans la turbine (22), le gaz recyclé est préalablement réchauffé (16).

13. Procédé selon l'une des revendications 1 à 12, **caractérisé en ce qu'**au moins une partie du débit enrichi en CO₂ comprimé à l'étape de compression intermédiaire (7) est refroidi (37, 43) à une température supérieure à 0°C, de préférence la partie liquide qui se condense est éliminée.

14. Procédé selon des revendications précédentes, **caractérisé en ce que** les composés non-condensables quittant l'unité cryogénique (9) sont refroidis suffisamment pour faire givrer du CO₂ sous forme de neige carbonique et pour séparer le CO₂ ainsi givré du flux contenant les composés non-condensables.

15. Installation intégrée de production de CO₂ à partir d'un gaz d'alimentation contenant du CO₂ **et provenant d'un haut-fourneau** comprenant :
- une unité d'adsorption (3) pour séparer le gaz contenant du CO₂ **et** provenant d'un haut-fourneau en un premier débit enrichi en CO₂ (6) et un premier débit appauvri en CO₂ (5), l'unité unité d'adsorption (3) alimentant une unité cryogénique (9) en ledit premier débit enrichi en CO₂ (6), et
- une unité cryogénique (9) pour séparer le premier débit riche en CO₂ issu de unité d'adsorption (3) et produire un second débit riche en CO₂ (11) et un second débit pauvre en CO₂ (10),
laquelle comporte, en outre, des moyens d'homogénéisation de gaz (17) aptes à atténuer des variations cycliques de pression, de débit et/ou de composition dudit gaz, et des moyens de compression (7) intermédiaires, agencés sur le trajet du premier débit enrichi en CO₂ (6), entre l'unité d'adsorption (3) et l'unité cryogénique (9), les moyens d'homogénéisation de gaz agencés en amont des moyens de compression.

16. Installation selon la revendication 15, **caractérisée en ce que** les moyens d'homogénéisation de gaz (17) comprennent au moins une capacité ou un réservoir de stockage.

17. Installation selon la revendication 15, **caractérisée en ce que** les moyens de compression (7) intermédiaires comprennent un ou plusieurs compresseurs de gaz.

## Claims

1. Integrated method using an adsorption unit (3) and a cryogenic unit (9), in which a feed gas containing CO₂ is sent to the adsorption unit (3) where it is separated into a first CO₂-enriched stream (6) and a first CO₂-depleted stream (5), the first CO₂-enriched stream being sent to the cryogenic unit (9) where it is separated into a second CO₂-rich stream (11) and a second CO₂-depleted stream (10), **characterized in that** said feed gas is a blast furnace gas and the first CO₂-enriched stream (6) issuing from the adsorption unit (3) contains between 40% and 95% CO₂, preferably between 60% and 85% CO₂, and is sent to gas homogenizing means (17) for attenuating cyclic variations in pressure, flow rate and/or composition of said gas, and is then subjected to at least one intermediate compression step (7) before it enters the cryogenic unit (9).

2. Method according to Claim 1, **characterized in that** the gas homogenizing means (17) comprise at least one storage tank or reservoir, the tank or reservoir being preferably maintained at a substantially constant pressure.

3. Method according to either of Claims 1 and 2, **characterized in that** the first CO₂-enriched stream (6) issuing from the adsorption unit (3) has a pressure below 4 bar, and preferably below 2 bar.

4. Method according to one of Claims 1 to 3, **characterized in that** the second CO₂-rich stream (11) issuing from the cryogenic separation unit (9) has a CO₂ content above 80%, preferably above 90%, and even more preferably above 95%.

5. Method according to one of Claims 1 to 4, **characterized in that** at least part of the second CO₂-depleted gas (10, 10B) leaving the cryogenic unit (9) is returned to the adsorption unit (3).

6. Method according to Claim 5, **characterized in that** at least part of the second CO₂-depleted gas (10, 10B) leaving the cryogenic unit (9) is returned either to the suction inlet of a compressor feeding the adsorption unit (3), or upstream of the adsorber(s) of the adsorption unit (3), or in the adsorber(s) of the adsorption unit (3) during a cocurrent or countercurrent repressurizing step or during an adsorption step.

7. Method according to one of Claims 1 to 6, **characterized in that** a refrigerating unit of the cryogenic unit (9) is also used to cool the feed gas (1) entering the adsorption unit (3).

8. Method according to one of Claims 1 to 7, **characterized in that** the first CO₂-depleted stream (5) produced by the adsorption unit (3) is expanded in a turbine (12) to produce refrigerating capacity (15) for the cryogenic unit (9).

9. Method according to one of Claims 1 to 8, **characterized in that** at least part (10B) of the second CO₂-depleted gas (10) leaving the cryogenic unit (9) is expanded in a turbine (22).

10. Method according to Claim 9, **characterized in that** at least part (10B) of the second CO₂-depleted gas (10) expanded in a turbine (22) is recycled to the adsorption unit (3).

11. Method according to Claim 10, **characterized in that** the expanded second CO₂-depleted gas (10) is recycled either to the suction inlet of a compressor feeding the adsorption unit (3), or upstream of the adsorber(s) of the adsorption unit (3), or in the adsorber(s) during a cocurrent or countercurrent repressurizing step or during an adsorption step.

12. Method according to either of Claims 9 and 10, **characterized in that** before entering the turbine (22), the recycled gas is previously heated (16).

13. Method according to one of Claims 1 to 12, **characterized in that** at least part of the CO₂-enriched stream compressed in the intermediate compression step (7) is cooled (37, 43) to a temperature above 0°C, and the liquid part that condenses is preferably removed.

14. Method according to the preceding claims, **characterized in that** the incondensable compounds leaving the cryogenic unit (9) are cooled sufficiently to freeze CO₂ in the form of dry ice and to separate the CO₂ thus frozen from the stream containing the incondensable compounds.

15. Integrated installation for producing CO₂ from a feed gas containing CO₂, coming from a blast furnace, comprising:
- an adsorption unit (3) for separating the gas containing CO₂, coming from a blast furnace, into a first CO₂-enriched stream (6) and a first CO₂-depleted stream (5) the adsorption unit (3) feeding a cryogenic unit (9) with said first CO₂-enriched stream (6), and
- a cryogenic unit (9) for separating the first CO₂-rich stream issuing from the adsorption unit (3) and producing a second CO₂-rich stream (11) and a second CO₂-depleted stream (10),
which installation further comprises gas homogenizing means (17) for attenuating cyclic variations in pressure, flow rate and/or composition of said gas, and intermediate compression means (7), arranged on the path of the first CO₂-enriched stream (6), between the adsorption unit (3) and the cryogenic unit (9), the gas homogenizing means being located upstream from the compression means.

16. Installation according to Claim 15, **characterized in that** the gas homogenizing means (17) comprise at least one storage tank or reservoir.

17. Installation according to Claim 15, **characterized in that** the intermediate compression means (7) comprise one or a plurality of gas compressors.

## Patentansprüche

1. Integriertes Verfahren unter Verwendung einer Adsorptionseinheit (3) und einer Tieftemperatureinheit (9), bei dem man der Adsorptionseinheit (3) ein CO₂ enthaltendes Einsatzgas zuführt, welches darin in einen ersten CO₂-angereicherten Strom (6) und einen ersten CO₂-abgereicherten Strom (5) zerlegt wird, wobei der erste CO₂-angereicherte Strom der Tieftemperatureinheit (9) zugeführt wird, in der er in einen zweiten CO₂-reichen Strom (11) und einen zweiten CO₂-armen Strom (10) zerlegt wird, **dadurch gekennzeichnet, daß** es sich bei dem Einsatzgas um ein Hochofengas handelt und der erste CO₂-angereicherte Strom (6) aus der Adsorptionseinheit (3) zwischen 40% und 95% CO₂, vorzugsweise zwischen 60% und 85% CO₂, enthält und Gashomogenisierungsmitteln (17) zur Minderung von zyklischen Variationen von Druck, Durchsatz und/oder Zusammensetzung des Gases zugeführt und dann vor dem Eintritt in die Tieftemperatureinheit (9) mindestens einem Zwischenverdichtungsschritt (7) unterworfen wird.

2. Verfahren nach Anspruch 1, **dadurch gekennzeichnet, daß** die Gashomogenisierungsmittel (17) mindestens einen Speicherbehälter oder einen Speichertank umfassen, wobei der Behälter oder Tank vorzugsweise bei weitgehend konstantem Druck gehalten wird.

3. Verfahren nach Anspruch 1 oder 2, **dadurch gekennzeichnet, daß** der erste CO₂-angereicherte Strom (6) aus der Adsorptionseinheit (3) einen Druck von weniger als 4 bar, vorzugsweise weniger als 2 bar, aufweist.

4. Verfahren nach einem der Ansprüche 1 bis 3, **dadurch gekennzeichnet, daß** der zweite CO₂-reiche Strom (11) aus der Tieftemperatureinheit (9) einen CO₂-Gehalt von mehr als 80%, vorzugsweise mehr als 90% und noch weiter bevorzugt mehr als 95% aufweist.

5. Verfahren nach einem der Ansprüche 1 bis 4, **dadurch gekennzeichnet, daß** mindestens ein Teil des aus der Tieftemperatureinheit (9) austretenden zweiten CO₂-armen Gases (10, 10B) zur Adsorptionseinheit (3) zurückgeführt wird.

6. Verfahren nach Anspruch 5, **dadurch gekennzeichnet, daß** mindestens ein Teil des aus der Tieftemperatureinheit (9) austretenden zweiten CO₂-armen Gases (10, 10B) entweder zur Ansaugung eines Einsatzverdichters der Adsorptionseinheit (3) oder stromaufwärts des Adsorbers bzw. der Adsorber der Adsorptionseinheit (3) oder in den Adsorber oder die Adsorber der Adsorptionseinheit (3) während eines Druckwiederbeaufschlagungsschritts im Gleichstrom oder im Gegenstrom oder während eines Adsorptionsschritts zurückgeführt wird.

7. Verfahren nach einem der Ansprüche 1 bis 6, **dadurch gekennzeichnet, daß** ein Kühlaggregat der Tieftemperatureinheit (9) auch zum Kühlen des in die Adsorptionseinheit (3) eintretenden Einsatzgases (1) dient.

8. Verfahren nach einem der Ansprüche 1 bis 7, **dadurch gekennzeichnet, daß** der von der Adsorptionseinheit (3) produzierte erste CO₂-abgereicherte Strom (5) in einer Turbine (12) entspannt wird, so daß die Kälteleistung (15) für die Tieftemperatureinheit (9) produziert wird.

9. Verfahren nach einem der Ansprüche 1 bis 8, **dadurch gekennzeichnet, daß** mindestens ein Teil (10B) des aus der Tieftemperatureinheit (9) austretenden zweiten CO₂-armen Gases (10) in einer Turbine (22) entspannt wird.

10. Verfahren nach Anspruch 9, **dadurch gekennzeichnet, daß** mindestens ein Teil (10B) des zweiten CO₂-armen Gases (10) in einer Turbine (22) entspannt und zur Adsorptioneinheit (3) zurückgeführt wird.

11. Verfahren nach Anspruch 10, **dadurch gekennzeichnet, daß** das entspannte zweite CO₂-arme Gas (10) entweder zur Ansaugung eines Einsatzverdichters der Adsorptionseinheit (3) oder stromaufwärts des Adsorbers bzw. der Adsorber der Adsorptionseinheit (3) oder in den Adsorber oder die Adsorber während eines Druckwiederbeaufschlagungsschritts im Gleichstrom oder im Gegenstrom oder während eines Adsorptionsschritts zurückgeführt wird.

12. Verfahren nach Anspruch 9 oder 10, **dadurch gekennzeichnet, daß** das zurückgeführte Gas vor dem Eintritt in die Turbine (22) vorerwärmt wird (16).

13. Verfahren nach einem der Ansprüche 1 bis 12, **dadurch gekennzeichnet, daß** mindestens ein Teil des in dem Zwischenverdichtungsschritt (7) verdichteten CO₂-angereicherten Stroms auf eine Temperatur von mehr als 0°C abgekühlt wird (37, 43) und der kondensierende flüssige Teil vorzugsweise entfernt wird.

14. Verfahren nach den vorhergehenden Ansprüchen, **dadurch gekennzeichnet, daß** die aus der Tieftemperatureinheit (9) austretenden nichtkondensierbaren Verbindungen so weit abgekühlt werden, daß CO₂ in Form von Trockeneis ausfriert und das so ausgefrorene CO₂ von dem die nichtkondensierbaren Verbindungen enthaltenden Strom abgetrennt wird.

15. Integrierte Anlage zur Produktion von CO₂ aus einem CO₂ enthaltenden und aus einem Hochofen stammenden Einsatzgas mit:
- einer Adsorptionseinheit (3) zur Zerlegung des CO₂ enthaltenden und aus einem Hochofen stammenden Einsatzgases in einen ersten CO₂-angereicherten Strom (6) und einen ersten CO₂-abgereicherten Strom (5), wobei die Adsorptionseinheit (3) eine Tieftemperatureinheit (9) mit dem ersten CO₂-angereicherten Strom (6) speist, und
- einer Tieftemperatureinheit (9) zur Zerlegung des ersten CO₂-reichen Stroms aus der Adsorptionseinheit (3) und Produktion eines zweiten CO₂-reichen Stroms (11) und eines zweiten CO₂-armen Stroms (10),
die außerdem Gashomogenisierungsmittel (17) zur Minderung von zyklischen Variationen von Druck, Durchsatz und/oder Zusammensetzung des Gases und auf der Bahn des ersten CO₂-angereicherten Stroms (6) angeordnete Zwischenverdichtungsmittel (7) zwischen der Adsorptionseinheit (3) und der Tieftemperatureinheit (9) aufweist, wobei die Gashomogenisierungsmittel stromaufwärts der Verdichtungsmittel angeordnet sind.

16. Anlage nach Anspruch 15, **dadurch gekennzeichnet, daß** die Gashomogenisierungsmittel (17) mindestens einen Speicherbehälter oder einen Speichertank umfassen.

17. Anlage nach Anspruch 15, **dadurch gekennzeichnet, daß** die Zwischenverdichtungsmittel (7) einen oder mehrere Gasverdichter umfassen.
